Europäisches Patentamt

European Patent Office

Office européen des brevets

(19)

(11) **EP 1 390 790 B1**

(12) **EUROPÄISCHE PATENTSCHRIFT**

(45) Veröffentlichungstag und Bekanntmachung des Hinweises auf die Patenterteilung:
**22.06.2005 Patentblatt 2005/25**

(51) Int Cl.$^7$: **G02B 6/44**

(21) Anmeldenummer: 02727558.5

(22) Anmeldetag: **12.04.2002**

(86) Internationale Anmeldenummer:
**PCT/EP2002/004089**

(87) Internationale Veröffentlichungsnummer:
**WO 2002/097502 (05.12.2002 Gazette 2002/49)**

(54) **OPTISCHE VERTEILEREINRICHTUNG UND LICHTWELLENLEITER-VERBINDUNGSKABEL**

OPTICAL DISTRIBUTION DEVICE AND LIGHT WAVEGUIDE CONNECTOR CABLE

DISPOSITIF DE REPARTITION OPTIQUE ET CABLE DE CONNEXION DE GUIDES D'ONDES OPTIQUES

(84) Benannte Vertragsstaaten:
**AT BE CH CY DE DK ES FI FR GB GR IE IT LI LU MC NL PT SE TR**

(30) Priorität: **30.05.2001 DE 10126351**

(43) Veröffentlichungstag der Anmeldung:
**25.02.2004 Patentblatt 2004/09**

(73) Patentinhaber: **CCS Technology, Inc.**
**Wilmington, DE 19803 (US)**

(72) Erfinder:
• **FRÖHLICH, Franz-Friedrich**
**58091 Hagen (DE)**
• **SPENDE, Peter**
**10785 Berlin (DE)**

(74) Vertreter: **Sturm, Christoph, Dipl.-Ing.**
**Quermann Sturm GbR**
**Patentanwälte**
**Unter den Eichen 7**
**65195 Wiesbaden (DE)**

(56) Entgegenhaltungen:
**DE-A- 19 860 708**    **US-A- 5 448 675**
**US-B1- 5 870 626**

• **PATENT ABSTRACTS OF JAPAN vol. 018, no. 175 (P-1716), 24. März 1994 (1994-03-24) & JP 05 340987 A (HIDEJI OGAWA), 24. Dezember 1993 (1993-12-24)**
• **PATENT ABSTRACTS OF JAPAN vol. 1999, no. 09, 30. Juli 1999 (1999-07-30) & JP 11 121135 A (TSUDA ELECTRIC WIRE &AMP;CABLE CO LTD; TSUDA EREKKU:KK), 30. April 1999 (1999-04-30)**

**Beschreibung**

Die Erfindung betrifft eine optische Verteilereinrichtung sowie ein Lichtwellenleiter-Verbindungskabel zur Verwendung in einer optischen Verteilereinrichtung.

In einem faseroptischen Aufteilungsfeld (patch panel) werden die einzelnen ankommenden und abgehenden Fasern mittels Rangierleitungen (patch cords) miteinander verbunden. Unter ankommenden Fasern sind hierbei jene Fasern zu verstehen, über welche Lichtsignale in Richtung zu dem Aufteilungsfeld gesandt werden; über die abgehenden Fasern werden die Lichtsignale von dem Aufteilungsfeld aus weitergeleitet. Hierbei hängt es ferner von der Signalrichtung ab, ob eine Faser ankommende oder abgehende Faser ist, d. h. die jeweilige Faser ist ankommende Faser, wenn über sie Datensignale zu dem Verteilerfeld geschickt werden, und sie ist abgehende Faser, wenn über sie Datensignale von dem Verteilerfeld aus weitergeleitet werden. Bei einer steigenden Anzahl von Verbindungen wird die Übersicht im Aufteilungsfeld immer schwieriger. Damit ein Bediener zu Überwachungszwecken die korrekten Verbindungen der ankommenden Fasern mit den abgehenden Fasern einfacher nachvollziehen kann, ist es daher notwendig, ein System zu installieren, welches die Identifikation der durch die Rangierleitungen erreichten optischen Verbindungen erleichtert und welches einen einfachen Aufbau hat .

Dokument US 5 870 626 offenbart ein System zur elektronischen Datenübertragung zwischen verschiedenen Geräten und einer Rechnerschnittstelle mit Hilfe einer elektronischen Kodierung der einzelnen Geräte.

Durch die Erfindung werden eine optische Verteilereinrichtung sowie ein Lichtwellenleiter-Verbindungskabel zur Verwendung in einer optischen Verteilereinrichtung geschaffen, mittels deren in der Verteilereinrichtung vorliegenden optische Verbindungen in einfacher und dennoch zuverlässiger Weise identifizierbar sind.

Die erfindungsgemäße optische Verteilereinrichtung hat gemäß Anspruch 1 erste Anschlußstellen zum Anschluß von ankommenden Lichtwellenleiterkabeln, zweite Anschlußstellen zum Anschluß von abgehenden Lichtwellenleiterkabeln und wenigstens ein Lichtwellenleiter-Verbindungskabel, über welches eine oder mehrere der ersten Anschlußstellen mit einer oder mehreren der zweiten Anschlußstellen verbindbar sind und welches an seinen Enden jeweils eine oder mehrere Anschlußeinrichtungen zum Anschluß an die Anschlußstellen aufweist. Die Anschlußeinrichtungen sind jeweils mit einer elektrischen Code-Speichervorrichtung versehen, in welcher ein Identifizierungscode gespeichert ist. Die Anschlußstellen sind ihrerseits ferner mit einer Code-Leseeinrichtung versehen, welche, wenn die jeweilige Anschlußeinrichtung an die jeweilige Anschlußstelle angeschlossen ist, zum Lesen des Identifizierungscodes mit der zugehörigen Code-Speichervorrichtung verbunden ist. Die optische Verteilereinrichtung hat ferner eine Steuereinrichtung, welche mit der jeweiligen Code-Lesevorrichtung über eine Datenleitung verbunden ist und von welcher die gelesenen Identifizierungscodes zur Identifikation der von dem jeweiligen Lichtwellenleiter-Verbindungskabel bewirkten optischen Verbindung ausgewertet werden. Gemäß der Erfindung wird die jeweilige Code-Speichervorrichtung von einem elektronischen Speicherchip gebildet, welcher, wenn die jeweilige Anschlußeinrichtung an die jeweilige Anschlußstelle angeschlossen ist, zum Lesen des Identifizierungscodes mit der zugehörigen Code-Speichervorrichtung galvanisch verbunden ist.

Bei der erfindungsgemäßen optischen Verteilereinrichtung, können die durch das eine oder die mehreren Lichtwellenleiter-Verbindungskabel erzielten optischen Verbindungen sicher identifiziert werden. Die Steuereinrichtung frägt hierzu z.B. in regelmäßigen Abständen sämtliche Anschlußstellen ab. Falls keine Anschlußeinrichtung an die abgefragte Anschlußstelle angeschlossen ist, erhält die Steuereinrichtung z.B. einfach kein Signal von der dortigen Code-Lesevorrichtung, woraus die Steuereinrichtung erkennt, daß dort keine Verbindung vorliegt.

Im Falle daß eine Anschlußeinrichtung eines Verbindungskabels an eine Anschlußstelle angeschlossen ist, erhält die Steuereinrichtung von der dortigen Code-Leseeinrichtung den Identifizierungscode der zugehörigen Verbindungseinrichtung und kann dadurch die durch das zugehörige Verbindungskabel erreichte Verbindung exakt identifizieren und dem Bediener mitteilen.

Die Steuereinrichtung kann auch derart ausgebildet sein, daß von ihr beim Verlegen der Verbindungskabel dem Bediener Anweisungen gegeben werden, wie die zugehörigen Anschlußeinrichtungen und damit die Verbindungskabel anzuschließen sind. Hierzu kann die Steuereinrichtung z.B. anzeigen, daß die Anschlußeinrichtung mit einem bestimmten Identifizierungscode mit einer bestimmten Anschlußstelle zu verbinden ist. Damit der Bediener die entsprechende Anschlußeinrichtung aufgreifen und an die angezeigte Anschlußstelle anschließen kann, sind z.B. sowohl die Anschlußeinrichtung als auch die Anschlußstelle mit einer entsprechenden Identifikationsmarke beschriftet, beispielsweise in Form einer Prägung oder einer Plakette. Von der Steuereinrichtung kann in der oben erläuterten Weise dann gleichzeitig überprüft werden, ob die Anschlüsse auch korrekt vorgenommen wurden und damit ob die gewünschte optische Verbindung hergestellt wurde.

Der elektronische Speicherchip kann wegen seiner geringen Größe besonders platzsparend und einfach an der Anschlußeinrichtung angeordnet werden kann. Die galvanische Verbindung zwischen der Code-Lesevorrichtung und der Code-Speichervorrichtung kann konstruktiv einfach, z.B. mittels einfacher Kontaktfedern, die eine Lötstelle als korrespondierende Kontaktstelle kontaktieren, und damit kostengünstig realisiert werden. Der Speicherchip liefert ferner den Identifizierungscode in Form von entlang von Drahtleitungen oder Leiterbahnen unmittelbar weiterleitbaren elektrischen Signalen; eine Umwandlung der vom Chip ausgehenden Codesignale in derartig weiterleitbare Signale und eine damit verbundene Umwandlungsvorrichtung sind damit nicht erforderlich. Die Stromversorgung der elektrischen Code-Speichervorrichtungen erfolgt bevorzugt über den galvanischen Kontakt an die Code-Lesevorrichtungen. Es ist jedoch auch denkbar, daß die Code-Speichervorrichtungen jeweils mit einer eigenen Batterie versehen sind, welche an der zugehörigen Anschlußeinrichtung mit angebracht ist.

Die Anschlußeinrichtung kann ein Anschlußstecker oder eine Anschlußbuchse sein, der/die mit einer zugehörigen Anschlußbuchse bzw. einem Anschlußstecker der Anschlußstelle der Verteilereinrichtung kuppelbar ist.

Das Lichtwellenleiter-Verbindungskabel kann ein einfaseriges Kabel sein, d.h. ein Kabel, welches nur eine einzige Lichtleitfaser aufweist. Das Lichtwellenleiter-Verbindungskabel ist jedoch insbesondere ein mehrfaseriges Kabels, d.h. ein Kabel welches mehrere lichtleitende Fasern umfaßt. Das mehrfaserige Lichtwellenleiter-Verbindungskabel hat nach einer Ausführungsform an seinen Enden jeweils eine Mehrfaser-Anschlußeinrichtung, wie z.B. einen Mehrfaserstecker. Nach einer anderen Ausführung sind an einem oder an beiden Enden Einzelfaser-Anschlußeinrichtungen, wie z.B. Einzelfaserstecker, vorgesehen, die der jeweiligen Lichtleitfaser des Kabels zugeordnet sind.

Die Code-Speichervorrichtung kann z.B. Anschlußkontakte in Form von Kontaktfedern aufweisen, welche mit zugehörigen Kontaktstellen an der Code-Lesevorrichtung in Kontakt bringbar sind. Bevorzugt ist die Code-Speichervorrichtung in Verbindung mit der jeweiligen Code-Lesevorrichtung derart ausgebildet, daß die Code-Speichervorrichtung automatisch mit dem Anschließen der zugehörigen Anschlußeinrichtung an die Anschlußstelle mit der Code-Lesevorrichtung verbunden wird. Nach einer Ausführungsform der Erfindung ist die Code-Lesevorrichtung als Leiterplatte ausgebildet, auf welcher Lese-Kontaktstellen ausgebildet sind, welche bei angeschlossener Anschlußeinrichtung von Kontaktgegenstücken, wie z.B. Kontaktfedern, der Code-Speichervorrichtung kontaktiert werden. Die Leiterplatte stellt eine ebenfalls bezüglich der Baugröße vorteilhafte Lösung dar; zusätzlich können auf der Leiterplatte auch bereits Steuervorrichtungen vorgesehen sein, von welchen die der Steuereinrichtung zuzuführenden Signale bereits vorab aufbereitet werden.

Jedoch kann auch die Code-Speichervorrichtung eine Leiterplatte aufweisen, auf der Übertragungs-Kontaktstellen ausgebildet sind, welche dann mit verteilerseitig angeordneten Kontaktgegenstücken, wie z.B. Kontaktfedern, in galvanische Verbindung gebracht sind, wenn die Anschlußeinrichtung mit der Anschlußstelle verbunden ist.

Die Identifizierung der jeweiligen optischen Verbindung kann erfindungsgemäß wie nachfolgend erläutert erfolgen.

Nach einer Ausführungsform ist in der jeweiligen elektrischen Code-Speichervorrichtung als Identifizierungscode eine mehrstellige Nummer gespeichert, deren letzte Ziffer (oder letztes Bit) den Typ des Lichtwellenleiter-Verbindungskabels definiert, wobei die vorangehenden Ziffern das Lichtwellenleiter-Verbindungskabel zusammen mit den daran angeschlossenen Anschlußeinrichtungen jeweils individuell definieren. Anstelle der letzten Ziffer kann auch eine beliebige andere Ziffer, z.B. in Form eines Bits, in dem Identifizierungscode dazu herangezogen werden, den Typ des Lichtwellenleiter-Verbindungskabels zu definieren. In diesem Falle wird der dem jeweiligen Kabel individuell zugeordnete Identifizierungscode von den diese Ziffer oder dieses Bit umgebenden Ziffern oder Bits gebildet, wobei die vorbestimmte Ziffer für den jeweils zugehörigen Kabel-Typ stets gleich bleibt.

Im Falle daß z.B. das Lichtwellenleiter-Verbindungskabel mit jeweils einer einzigen Anschlußeinrichtung an beiden Enden vorgesehen ist, kann der Identifizierungscode, der in den beiden zu diesem Verbindungskabel dann zugehörigen Code-Speichervorrichtungen gespeichert ist, z.B. die Nummer 34561841 sein. Aus z.B. der letzten Ziffer, hier einer 1, erkennt die Steuereinrichtung, daß es sich bei diesem Verbindungskabel um den genannten Typ mit jeweils einer einzigen Anschlußeinrichtung an den Kabelenden handelt. Die beiden Identifizierungscodes sind zueinander identisch, so daß die Steuereinrichtung, sobald sie den Identifizierungscode der einen Anschlußeinrichtung an einer Anschlußstelle erfaßt hat, nur noch nach der anderen Anschlußstelle suchen muß, an der der gleiche Identifizierungscode vorliegt, um die dadurch erzielte optische Verbindung genau zu identifizieren.

Im Falle daß z.B. ein Lichtwellenleiter-Verbindungskabel vorliegt, das nur an einem Ende eine einzige Anschlußeinrichtung aufweist, wohingegen am anderen Ende eine Mehrzahl von Anschlußeinrichtungen vorgesehen sind, kann die Identifizierung eines solchen Kabels zusammen mit den durch dieses Kabel erreichten optischen Verbindungen z.B. dadurch erfolgen, daß wiederum auf Basis der letzten Ziffer des Identifizierungscodes gerade dieser Typ von Kabel definiert wird, wobei nunmehr aber die vorangehenden Ziffern der zu diesem Kabel gehörigen Anschlußeinrichtungen nicht mehr zueinander identisch sind, sondern voneinander verschieden sind, z.B. in Form einer fortlaufenden Numerierung.

Bei einem achtfaserigen Lichtwellenleiter-Verbindungskabels, das an einem Ende eine Achtfaser-Anschlußeinrichtung aufweist und das am anderen Ende acht Einzelfaser-Anschlußeinrichtungen aufweist, kann die den Typ dieses Kabels definierende Endziffer des Identifizierungscodes z.B. 2 sein; der Identifizierungscode der Mehrfaser-Anschlußeinrichtung kann hierbei z.B. die Nummer 4567322 haben. Die acht Einzelfaser-Anschlußeinrichtungen erhalten dann davon ausgehend die Nummern 4567332 bis 4567402 erhalten. Die Steuereinrichtung erkennt anhand der Endziffer 2, daß eine solche fortlaufend numerierte Ziffernfolge vorliegen muß und sucht dementsprechend, sobald sie einen solchen Identifizierungscode erfaßt hat, automatisch nach den zu der erfaßten Nummernfolge zugehörigen Codes in der Verteilereinrichtung. Damit können die aus der Mehrfach-Anschlußeinrichtung hervorgehenden einzelnen optischen Verbindungen in einfacher und sicherer Weise erfaßt werden. Anstelle der Endziffer eines Nummerncodes kann auch eine beliebige andere Ziffer im Nummercode zur Typ-Identifizierung herangezogen werden.

Es ist auch möglich, prinzipiell nicht wiederkehrende Nummerncodes zu verwenden. So kann z.B. die Ziffernfolge, die der den Verbindungskabel-Typ allgemein definierenden letzten Ziffer vorausgeht, durch die folgende Formel definiert sein:

$$CZF(n,x) = Z_{max} * n + Z(n,x).$$

Hierbei ist $CZF(n,x)$ die Code-Ziffernfolge der Anschlußeinrichtung x des Verbindungskabels n, $Z_{max}$ die Anzahl der Anschlußeinrichtungen jenes Verbindungskabels, welches von den insgesamt in der Verteilereinrichtung verwendeten Verbindungskabeln die meisten Anschlußeinrichtungen aufweist, und $Z(n,x)$ eine fortlaufende Ziffer von 0 bis der Anzahl minus 1 der Anschlußeinrichtungen x des zugehörigen Verbindungskabels, welche Ziffer $Z(n,x)$ der jeweiligen Anschlußeinrichtung dieses Verbindungskabels n zugeordnet ist.

Diese Wahl von Identifizierungscodes eignet sich damit z.B. für Verteilereinrichtungen, in denen nur solche Verbindungskabel verwendet werden, die an einem Ende z.B. nur eine einzige Anschlußeinrichtung und am anderen Ende bis maximal $Z(n,x)$ Anschlußeinrichtungen aufweisen. Bei einer solchen Verteilereinrichtung mit z.B. Verbindungskabeln mit jeweils nur einer Anschlußeinrichtung an einem Kabelende und maximal acht Anschlußeinrichtungen am anderen Kabelende haben die Anschlußeinrichtungen eines ersten Kabels (n = 1), welches an seinen beiden Enden jeweils nur eine Anschlußeinrichtung aufweist, die Code-Ziffernfolgen $CZF(1,1) = 9 * 1 + 0 = 9$ und $CZF(1,2) = 9 * 1 + 1 = 10$. Die zugehörigen Identifizierungscodes sind ...000091 und ...000101; wie oben erläutert, bleibt die letzte Ziffer (hier 1) des Identifikationscodes stets gleich und kennzeichnet diesen Kabeltyp. Ein zweites Verbindungskabel (n = 2), welches an einem Ende eine einzige Anschlußeinrichtung und am anderen Ende acht Anschlußeinrichtungen aufweist, hat dann die Code-Ziffernfolgen $CZF(2,1) = 9 * 2 = 18$ bis $CZF(2,9) = 9$

$* 2 + 8 = 26$, wobei die zugehörigen Code-Nummern der Identifizierungscodes dann von ...0000182 bis ...000262 gehen.

Es besteht auch die Möglichkeit, keine Kabeltyp-Kennziffer zu verwenden, d.h. z.B. kein Indexbit zu verwenden. Dann kann man z.B. jeweils einer Anschlußeinrichtung pro Verbindungskabel, insbesondere einer Mehrfaseranschlußeinrichtung, an einer Stelle des Nummerncodes eine bestimmte Ziffer zuordnen, z. B. in der Form daß der Nummerncode dieser Anschlußeinrichtung stets mit der Ziffer 0 endet, wobei dann die anderen Stecker dieses Verbindungskabels von der Ziffer 0 ausgehend fortlaufend erhöhte Nummern erhalten.

In jedem Falle sind die verwendeten Identifizierungscodes derart von der Steuereinrichtung verarbeitbar, daß diese, wenn sie einen Identifizierungscode einer Anschlußeinrichtung eines Verbindungskabels erfaßt hat, sofort die Identifizierungscodes der zu diesem Verbindungskabel noch gehörigen Anschlußeinrichtungen ermitteln kann, um deren Anschlußpositionen und damit die zugehörigen optischen Verbindungen genau ermitteln zu können.

Die Code-Speichervorrichtung kann an der Außenseite der Anschlußeinrichtung frei angebracht, z. B. angeklebt oder angeschraubt, sein. Bevorzugt ist die Code-Speichervorrichtung in einem Gehäuse untergebracht, welches seinerseits an der Anschlußeinrichtung angebracht ist, insbesondere an deren Außenseite. Das Gehäuse der Code-Speichervorrichtung kann mit einem Gehäuse der Anschlußeinrichtung stofflich einstückig vorgesehen sein, wobei die Code-Speichervorrichtung, d.h. der Speicherchip, auch unmittelbar mit in das Gehäuse eingegossen sein kann. Bevorzugt ist jedoch die Code-Speichervorrichtung auswechselbar an der Anschlußeinrichtung angebracht; so kann sie z.B. einfach an die Anschlußeinrichtung angeklipst sein. An der Anschlußeinrichtung, insbesondere an einem Gehäuse derselben, kann hierzu eine Adaptervorrichtung, z.B. in Form eines Sockels, vorgesehen sein, an welche eine zugeordnete Haltevorrichtung anklipsbar ist, an welcher die Code-Speichervorrichtung angebracht ist. Dies hat den Vorteil, daß auch bestehende Verbindungskabel nachträglich für die Erfindung verwendbar gemacht werden können.

Das erfindungsgemäße Lichtwellenleiter-Verbindungskabel zur Verwendung in einer optischen Verteilereinrichtung hat eine oder mehrere Lichtleitfasern zum Übertragen von Lichtsignalen und an jedem Ende eine oder mehrere Anschlußeinrichtungen, welche jeweils mit einer elektrischen Code-Speichervorrichtung versehen sind, von welcher ein Identifizierungscode zur Identifikation der dazugehörigen Anschlußeinrichtung und der an diese angeschlossene/n Lichtleitfaser/n gespeichert ist. Die Code-Speichervorrichtung wird von einem elektronischen Speicherchip gebildet, der Anschlußelemente, wie z.B. Kontaktzungen, Kontaktfedern oder Lötkontaktstellen, zur galvanischen Kopplung mit einer Code-Lesevorrichtung aufweist, um über einen solchen galvanischen Kontakt den gespeicherten Identifizierungscode an die Code-Lesevorrichtung zu übertragen. Das erfindungsgemäße Lichtwellenleiter-Verbindungskabel ist insbesondere zur Herstellung einer optischen Verbindung zwischen Anschlußstellen von ankommenden und von abgehenden Leitungen vorgesehen; es können jedoch auch andere optische Verbindungen mit dem erfindungsgemäßen Verbindungskabel hergestellt werden.

Nach einer alternativen Ausführungsform der Erfindung ist ein Lichtwellenleiter-Verbindungskabel zum Herstellen von optischen Verbindungen vorgesehen, welches eine oder mehrere Lichtleitfasern zum Übertragen von Lichtsignalen und an wenigstens einem Ende eine oder mehrere Anschlußeinrichtungen aufweist, wobei nur die an dem einen Ende vorgesehenen Anschlußeinrichtungen jeweils mit einer elektrischen Code-Speichervorrichtung versehen sind, von welcher ein Identifizierungscode zur Identifikation der zugehörigen Anschlußeinrichtung und der an diese angeschlossene/n Lichtleitfaser/n gespeichert ist, und wobei die an die jeweilige Anschlußvorrichtung angeschlossene/n Lichtleitfaser/n mit einer dem zugehörigen Identifizierungscode zugeordneten, äußerlich sichtbaren Markierung versehen ist.

Bei diesem erfindungsgemäßen Lichtwellenleiter-Verbindungskabel erfolgt eine automatische Identifikation der optischen Verbindung nur an einem Ende der jeweiligen Lichtwellenleiterfaser, wobei deren Verlauf für einen Bediener aus der äußerlich sichtbaren Markierung ersichtlich ist. Die Markierung kann z.B. eine Farbmarkierung sein, wie z.B. eine farblich markierte oder komplett farbige Lichtwellenleiterfaser-Ummantelung oder ein auf einer solchen Ummantelung aufgebrachter Aufdruck. Die Fasermarkierung ist vorteilhafterweise am anderen Ende der jeweiligen Faser vorgesehen. Die Code-Speichervorrichtung ist aus den oben genannten Gründen bevorzugt ebenfalls ein elektronischer Speicherchip.

Beim Anschließen eines solchen Verbindungskabels gibt zum Beispiel die Steuereinrichtung jene Anschlußstellen vor, an die das optische Verbindungskabel mit seinen mit Code-Speichervorrichtung versehenen Anschlußeinrichtungen anzuschließen ist. Die Steuereinrichtung gibt hierbei diese Anschlußstellen z.B. immer paarweise zusammen mit der jeweils gegenüberliegenden Anschlußstelle nacheinander aus, so daß der Bediener anhand der jeweiligen Markierungen der Lichtleitfasern auch die nicht mit elektrischen Code-Speichervorrichtungen versehenen Faserenden problemlos den zugehörigen Anschlußstellen zuordnen kann.

Nach einer Ausführungsform der Erfindung weist die jeweilige Anschlußeinrichtung ein Gehäuse auf, an dessen Außenseite die Code-Speichervorrichtung fest angebracht ist. Die Anbringung ist hierbei bevorzugt derart, daß die Code-Speichervorrichtung durch das Anschließen der Anschlußeinrichtung mit einer zugehörigen Code-Lesevorrichtung in Verbindung bringbar ist. Die Anschlußeinrichtung ist insbesondere als Anschlußstecker ausgebildet. Die Code-Speichervorrichtung ist bevorzugt ihrerseits in einem Gehäuse angebracht, welches am Gehäuse der Anschlußeinrichtung befestigt ist.

Es ist jedoch auch möglich, die Code-Speichervorrichtung mit einer separat von der optischen Anschlußeinrichtung des Lichtleiter-Verbindungskabel vorgesehen elektrischen Anschlußvorrichtung zu versehen, welche separat von der Anschlußbewegung der Anschlußeinrichtung mit einer zugehörigen elektrischen Kontaktiereinrichtung, wie z.B. einer Buchse, in Verbindung bringbar ist.

Die Erfindung wird im folgenden anhand von bevorzugten Ausführungsformen mit Bezugnahme auf die Zeichnung erläutert. In der Zeichnung zeigen:

Figur 1 schematisch eine Verteilereinrichtung nach einer Ausführungsform der Erfindung und

Figur 2 schematisch ein erfindungsgemäßes Lichtwellenleiter-Verbindungskabel, welches an einer Anschlußstelle einer optischen Verteilereinrichtung angeschlossen ist.

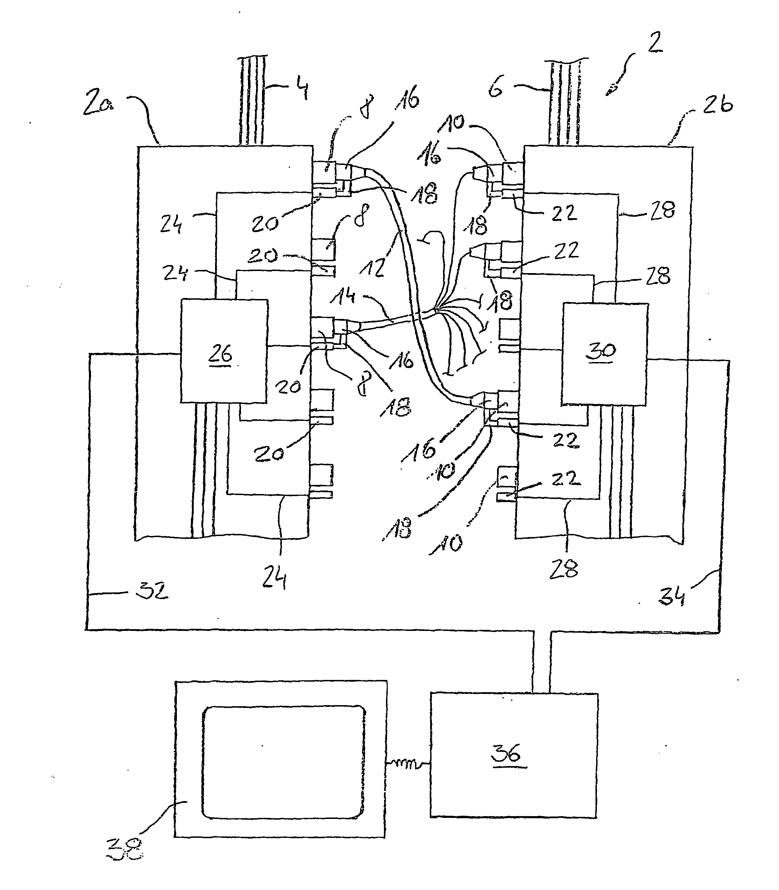

In Figur 1 ist schematisch ein Modul 2 einer mehrmoduligen, optischen Verteilereinrichtung gemäß einer Ausführungsform der Erfindung dargestellt. Das Modul 2 der optischen Verteilereinrichtung weist ein erstes Untermodul 2a, an dem ankommende optische Leitungen 4 angeschlossen sind, und ein zweites Untermodul 2b auf, an dem abgehende optische Leitungen 6 angeschlossen sind. Die ankommenden optischen Leitungen 4 sind hierzu mit am ersten Untermodul 2a vorgesehenen ersten Anschlußstellen 8 verbunden, welche hier in Form von Anschlußbuchsen ausgebildet sind. Die abgehenden Leitungen 6 sind mit zweiten Anschlußstellen 10 verbunden, welche am zweiten Untermodul 2b angeordnet sind und ebenfalls als Anschlußbuchsen vorgesehen sind.

Über die ankommenden optischen Leitungen 4 werden Lichtsignale an die Verteilereinrichtung herangeführt; über die abgehenden optischen Leitungen 6 werden die an der Verteilereinrichtung ankommenden Lichtsignale weitergeleitet.

Zur Verteilung der durch die ankommenden Leitungen 4 geführten Lichtsignale weist die Verteilereinrichtung eine Mehrzahl von Lichtwellenleiter-Verbindungskabeln 12, 14 (nur zwei sind dargestellt) auf, welche zwischen das erste Untermodul 2a und das zweite Untermodul 2b geschaltet sind, um die ersten und die zweiten Anschlußstellen 8, 10 und damit die daran angeschlossenen Lichtleitungen 4, 6 in gewünschter Weise miteinander zu verbinden. Hierzu weisen die Lichtwellenleiter-Verbindungskabel 12, 14 an ihren Enden je nach Verbindungskabel-Typ jeweils einen oder mehrere Anschlußeinrichtungen 16 auf, die hier passend zu den als Buchsen vorgesehenen Anschlußstellen 8, 10 als Anschlußstecker vorgesehen sind.

Das eine Lichtwellenleiter-Verbindungskabel 12 ist hier als Mehrfaserkabel ausgebildet, das an jedem Ende nur eine Mehrfaser-Anschlußeinrichtung 16 in Form eines Mehrfasersteckers aufweist. Das andere Lichtwellenleiter-Verbindungskabel 14 ist ebenfalls ein Mehrfaserkabel, welches jedoch nur an einem Ende (dem ersten Untermodul 2a zugewandten Ende) eine Mehrfaser-Anschlußeinrichtung 16 aufweist, wohingegen am anderen Ende 8 (dem zweiten Modul 2b zugewandten Ende) mehrere Einzelfaser-Anschlußeinrichtungen 16 in Form von Einzelfasersteckern vorgesehen sind (nur zwei Einzelfaser-Anschlußeinrichtungen sind dargestellt).

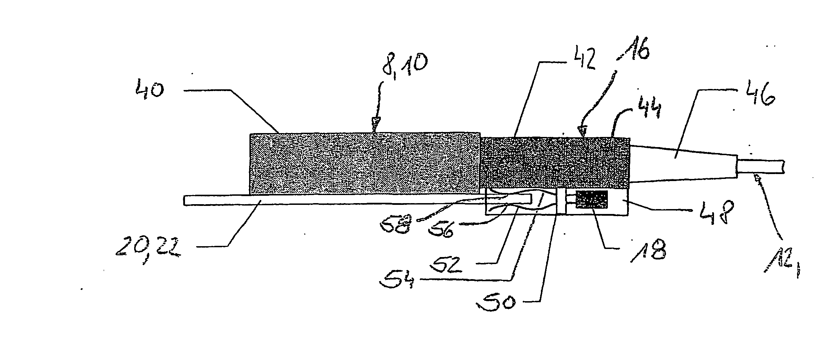

Sämtliche Anschlußeinrichtungen 16 der Verteilereinrichtung sind mit einer ihnen jeweils individuell zugeordneten elektrischen Code-Speichervorrichtung 18 versehen, von der eine Ausführungsform in Figur 2 detaillierter erläutert ist. Von der jeweiligen elektrischen Code-Speichervorrichtung 18 wird ein Identifizierungscode gespeichert, welcher der zugehörigen Anschlußeinrichtung 16 zugeordnet ist, so daß diese anhand des Identifizierungscodes identifizierbar ist.

Um den Identifizierungscode abgreifen zu können, ist jede Anschlußstelle 8, 10 mit einer Code-Lesevorrichtung 20, 22 versehen, welche, wenn eine Anschlußeinrichtung 16 an die zur Code-Lesevorrichtung 20, 22 zugehörige Anschlußstelle 8, 10 angeschlossen ist, mit der zur angeschlossenen Anschlußeinrichtung 16 gehörigen Code-Speichervorrichtung 18 zur Datenübertragung verbunden ist.

Bevorzugt sind hierbei, wie in der gezeigten Ausführungsform der Fall, die Anschlußeinrichtungen 16 mit ihren Code-Speichervorrichtungen 18 und die Anschlußstellen 20, 22 mit ihren Code-Lesevorrichtungen 22 derart ausgebildet, daß mit dem Anschluß der Anschlußeinrichtungen 16 an die Anschlußstellen 8, 10 (hier Einstecken der Anschlußstecker 16 in die Anschlußbuchsen 8, 10) gleichzeitig ein galvanisches Verbinden der zugehörigen Code-Speichervorrichtungen 18 mit den Code-Lesevorrichtungen 20, 22 erfolgt.

Die Code-Lesevorrichtungen 20 des ersten Untermoduls 2a sind über elektrische Datenleitungen 24 mit einer ersten, modulinternen Recheneinrichtung 26 verbunden. Die Code-Lesevorrichtungen 22 des zweiten Untermoduls 2b sind über elektrische Datenleitungen 28 mit einer zweiten, modulinternen Recheneinrichtung 30 verbunden. Die erste Recheneinrichtung 26 und die zweite Recheneinrichtung 30 sind ihrerseits über zugehörige, elektrische Datenleitungen 32, 34 mit einer Steuereinrichtung 36 verbunden, welche hier eine zentrale Steuereinrichtung der optischen Verteilereinrichtung bildet.

Die Steuereinrichtung 36 ist mit einer Anzeigeeinrichtung 38, z.B. einem Ausgabemonitor, und einer nicht dargestellten Eingabevorrichtung, z.B. einer Computertastatur, verbunden. Anstelle an die zwischengeschalteten, modulinternen Recheneinrichtungen 26, 30 angeschlossen zu sein, können die Code-Lesevorrichtungen 20, 22 auch direkt über ihre Datenleitungen 24, 28 an eine Steuereinrichtung wie die zentrale Steuereinrichtung 36 der Verteilereinrichtung angeschlossen sein, wobei die zwischengeschalteten Recheneinrichtungen 26, 30 dann entfallen können.

Gesteuert von der Steuereinrichtung 36 und den Recheneinrichtungen 26, 30 werden die Anschlußstellen 8, 10 der jeweiligen Module 2 der Verteilereinrichtung anhand der Code-Lesevorrichtungen 20, 22 in regelmäßigen Abständen und/oder nach Bedarf danach abgefragt, ob eine Anschlußeinrichtung 16 daran angeschlossen ist. Ein bestehender Anschluß kann z.B. daraus ermittelt werden, daß die Code-Lesevorrichtung 20, 22 von der Code-Speichervorrichtung 18 einer angeschlossenen Anschlußeinrichtung 16 den gespeicherten Identifikations-Code abgreifen kann. Falls ein solcher Abgreifvorgang nicht möglich ist, erkennt die Steuereinrichtung 36, daß keine Anschlußeinrichtung 16 an der abgefragten Anschlußstelle 8, 10 angeschlossen ist. Die zwischengeschalteten Recheneinrichtungen 26, 30 können von den Leseeinrichtungen erfaßte Daten aufbereiten und der zentralen Steuereinrichtung 36 zukommen lassen; umgekehrt leiten die Recheneinrichtungen 26, 30 von der Steuereinrichtung 36 kommende Steuerbefehle an die jeweiligen Lesevorrichtungen 20 weiter; letztere sind damit bei verringertem Datenleitungsbedarf zentral ansteuerbar.

Anhand der Identifikations-Codes, die den jeweiligen Anschlußeinrichtungen 16 individuell zugeordnet sind, kann die Steuereinrichtung dann genau ermitteln, an welchen Anschlußstellen 8, 10 welche Anschlußeinrichtung 16 angeschlossen ist. Der dadurch von der Steuereinrichtung 36 ermittelte optische Verschaltungsplan wird über die Anzeigeeinrichtung 38 einem Bediener mitgeteilt. Es ist auch möglich, daß die Steuereinrichtung 36 dem Bediener beim Rangieren anhand der Anzeigeeinrichtung 38 bereits vorgibt, an welche Anschlußstelle 20, 22 welche Anschlußeinrichtung 16 anzuschließen ist. Hierzu gibt die Steuereinrichtung 36 einen vorher eingegebenen Verschaltungsplan z.B. in der Weise vor, daß sie aufeinanderfolgend die jeweiligen Anschlußstellen 8, 10 ausgibt, z.B. in Form der Ausgabe von Anschlußstellennummern, und zusammen mit diesen Anschlußstellennummern die Identifikations-Codes jener Anschlußeinrichtungen 16 ausgibt, die an diese Anschlußstellen 8, 10 anzuschließen sind. An der jeweiligen Anschlußeinrichtung 16 kann der Identifikations-Code hierzu z.B. zusätzlich außen sichtbar angeordnet sein, beispielsweise in Form einer Prägung oder eines Aufklebers.

Nach erfolgtem Anschluß überprüft die Steuereinrichtung 36 die optische Verbindung in der oben erläuterten Weise und gibt ggf. ein Warnsignal aus, falls die von ihr ermittelte optische Verbindung nicht mit der dem Bediener vorgegebenen optischen Verbindung übereinstimmt.

In Figur 2 ist eine Anschlußstelle 8, 10 einer erfindungsgemäßen optischen Verteilereinrichtung bei angeschlossener Anschlußeinrichtung 16 eines zugehörigen Lichtwellenleiter-Verbindungskabels 12, 14 in schematischer Weise detaillierter dargestellt.

Die Anschlußstelle 8, 10 weist eine Anschlußbuchse 40 in Form eines mechanischen Lichtwellenleiter-Kupplungsstücks auf. An der Außenseite der Anschlußbuchse 40 ist eine Code-Lesevorrichtung 20, 22 angebracht, welche hier in Form einer Leiterplatine ausgebildet ist, auf der beidseitig elektrisch leitenden Kontakte, z.B. in Form von Leiterbahnen, ausgebildet sind.

Die Anschlußeinrichtung 16 des an die Anschlußstelle 8, 10 angeschlossenen Lichtwellenleiter-Verbindungskabels 12, 14 hat einen der Anschlußbuchse 40 zugeordneten Anschlußstecker 42, welcher aufweist: ein Steckergehäuse 44, in dem der oder die Lichtwellenleiterfaser/n geführt sind, eine Knickschutztülle 46, von welcher der Übergang von den im Steckergehäuse 44 verlaufenden Lichtleitfasern des Verbindungskabels 12, 14 in den Kabelmantel geschützt ist, und eine am Steckergehäuse 44 außen angebrachten Schutzabdeckung 48, in welcher eine Code-Speichereinrichtung 18 in Form eines elektronischen Speicherchips geschützt untergebracht ist.

Die Code-Speichereinrichtung 18 ist mittels eines Halters 50 am Steckergehäuse 44 angebracht. Der Halter 50 kann stofflich einstückig mit dem Steckergehäuse 44 ausgebildet sein. Die Code-Speichereinrichtung 18 ist bevorzugt lösbar an dem Halter 50 angebracht, so daß sie bei Bedarf ausgewechselt werden kann. Nach dieser Ausführungsform weist die Code-Speichervorrichtung 18 als Kontaktier- und Anschlußelemente zwei in Längsrichtung des Steckergehäuses 44 nach vorne (in Steckrichtung der Anschlußeinrichtung 16) weisende Kontaktfedern 52, 54 auf, die einander gegenüber liegen und federnd nach außen voneinander wegspreizbar sind. Im gezeigten Zustand ist die Code-Leseeinrichtung 20, 22 zwischen den beiden Kontaktfedern 52, 54 eingeklemmt, welche hierbei gegen auf der Code-Leseeinrichtung 20, 22 vorgesehene Kontaktstellen 56, 58 gedrückt sind, welche z.B. in Form von Lötstellen vorgesehen sind. Hierdurch ist eine galvanische Verbindung zwischen der Code-Speichervorrichtung 18 und der Code-Lesevorrichtung 20, 22 erzielt.

Die Code-Speichervorrichtung 18 ist derart fest mit dem Anschlußstecker 42 verbunden, daß sie mit diesem mitbewegbar ist, wobei gleichzeitig mit dem Einstecken des optischen Steckers 42 in die zugehörige optische Buchse 40 die galvanische Kontaktierung der Code-Speichervorrichtung 18 mit der Code-Lesevorrichtung 20, 22 und damit die für das Abgreifen des Identifizierungscodes erforderliche elektrische Verbindung erzielt wird.

**Patentansprüche**

1. Optische Verteilereinrichtung mit ersten Anschlußstellen (8) zum Anschluß von ankommenden Lichtwellenleiterkabeln (4), mit zweiten Anschlußstellen (10) zum Anschluß von abgehenden Lichtwellenleiterkabeln (6), mit wenigstens einem Lichtwellenleiter-Verbindungskabel (12, 14), über welches eine oder mehrere der ersten Anschlußstellen (8) mit einer oder mehreren der zweiten Anschlußstellen (10) verbindbar sind und welches an seinen Enden jeweils eine oder mehrere Anschlußeinrichtungen (16) zum Anschluß an die Anschlußstellen (8, 10) aufweist, wobei die Anschlußeinrichtungen (16) jeweils mit einer elektrischen Code-Speichervorrichtung (18) versehen sind, von welcher ein Identifizierungscode gespeichert ist, und die Anschlußstellen (8, 10) jeweils mit einer Code-Leseeinrichtung (20, 22) versehen sind, welche, wenn die jeweilige Anschlußeinrichtung (16) an die jeweilige Anschlußstelle (20, 22) angeschlossen ist, zum Lesen des Identifizierungscodes mit der zugehörigen Code-Speichervorrichtung (18) verbunden ist, und mit einer Steuereinrichtung (36), welche mit der jeweiligen Code-Lesevorrichtung (20, 22) verbunden ist und von welcher die gelesenen Identifizierungscodes zur Identifikation der von dem jeweiligen Lichtwellenleiter-Verbindungskabel (12, 14) bewirkten optischen Verbindung ausgewertet werden, wobei die Code-Speichervorrichtung (18) von einem elektronischen Speicherchip gebildet wird, welcher, wenn die jeweilige Anschlußeinrichtung (16) an die jeweilige Anschlußstelle (20, 22) angeschlossen ist, zum Lesen des Identifizierungscodes mit der zugehörigen Code-Leseeinrichtung (20, 22) galvanisch verbunden ist.

2. Optische Verteilereinrichtung nach Anspruch 1, wobei die jeweilige Code-Lesevorrichtung (20, 22) eine Leiterplatte aufweist, auf welcher Lese-Kontaktstellen (56, 58) vorgesehen sind, welche bei angeschlossener Anschlußeinrichtung (16) von Kontaktgegenstücken (52, 54) der Code-Speichervorrichtung (18) kontaktiert werden.

3. Optische Verteilereinrichtung nach Anspruch 1 oder 2, wobei der jeweilige Identifizierungscode von einer mehrstelligen Codenummer gebildet wird, wobei die letzte Ziffer der Codenummer den Typ des Lichtwellenleiter-Verbindungskabels (12, 14) definiert und wobei die vorangehenden Ziffern das Lichtwellenleiter-Verbindungskabel (12, 14) inklusive der daran angeschlossenen Anschlußeinrichtungen individuell festlegen.

4. Optische Verteilereinrichtung nach Anspruch 3, wobei im Falle daß das Lichtwellenleiter-Verbindungskabel (14) mit einer Mehrfaseranschlußeinrichtung an einem Ende und mit einer Mehrzahl von Einzelfaseranschlußeinrichtungen am anderen Ende vorgesehen ist, die zugehörigen Identifizierungscodes, mit Ausnahme der diesen Kabeltyp definierenden letzten Ziffer, in Form einer fortlaufenden Numerierung vorgesehen sind.

5. Optische Verteilereinrichtung nach Anspruch 3, wobei im Falle daß das Lichtwellenleiter-Verbindungskabel (12) mit jeweils einer Anschlußeinrichtung (16) an beiden Enden vorgesehen ist, die zugehörigen Identifizierungscodes zueinander identisch sind.

6. Optische Verteilereinrichtung nach Anspruch 3, wobei sich die der letzten Ziffer der Nummer vorangehenden Ziffern aus der folgenden Formel ergeben:

$$CZF(n,x) = Z_{Max} * n + Z(n,x), \text{ wobei}$$

CZF(n,x) die Code-Ziffernfolge der Anschlußeinrichtung x des Verbindungskabels n ist, $Z_{Max}$ die Anzahl der Anschlußeinrichtungen jenes Verbindungskabels ist, welches von den verwendeten Verbindungskabeln die meisten Anschlußeinrichtungen aufweist, und Z(n,x) eine fortlaufende Ziffer von 0 bis der Anzahl minus eins der Anschlußeinrichtungen x des zugehörigen Kabels n ist, welche Ziffer der jeweiligen Anschlußeinrichtung x zugeordnet ist.

7. Lichtwellenleiter-Verbindungskabel (12, 14) zur Verwendung in einer optischen Verteilereinrichtung nach einem der Ansprüche 1 bis 6, welches eine oder mehrere Lichtleitfasern zum Übertragen von Lichtsignalen und an jedem Ende eine oder mehrere Anschlußeinrichtungen (16) aufweist, welche jeweils mit einer elektrischen Code-Speichervorrichtung (18) versehen sind, von welcher ein Identifizierungscode zur Identifikation der zugehörigen Anschlußeinrichtung (16) und der an diese angeschlossene/n Lichtleitfaser/n gespeichert ist, wobei die Code-Speichervorrichtung (18) von einem elektronischen Speicherchip gebildet wird, der Anschlußelemente zur galvanischen Kopplung mit einer Code-Lesevorrichtung aufweist, um den gespeicherten Identifizierungscode an die Code-Lesevorrichtung zu übertragen.

8. Lichtwellenleiter-Verbindungskabel nach Anspruch 7, wobei die an die jeweilige Anschlußvorrichtung angeschlossene/n Lichtleitfaser/n mit einer dem zugehörigen Identifizierungscode zugeordneten, äußerlich sichtbaren Markierung versehen sind.

9. Lichtwellenleiter-Verbindungskabel (12, 14) nach einem der Ansprüche 7 bis 9, wobei die jeweilige Anschlußeinrichtung (16) ein Gehäuse (44) aufweist, an dessen Außenseite die Code-Speichervorrichtung (18) fest angebracht ist, und zwar derart, daß die Code-Speichervorrichtung (18) durch das Anschließen der Anschlußeinrichtung (16) mit einer zugehörigen Code-Lesevorrichtung (20, 22) in Verbindung bringbar ist.

## Claims

1. An optical distribution device having first connecting points (8) for connecting incoming light waveguide cables (4), having second connecting points (10) for connecting outgoing light waveguide cables (6), having at least one light waveguide connector cable (12, 14) via which one or more of the first connecting points (8) can be connected to one or more of the second connecting points (10) and which respectively has at its ends one or more connecting devices (16) for connecting to the connecting points (8), the connecting devices (16) being provided in each case with an electrical code memory device (18) in which an identification code is stored, and the connecting points (8, 10) being provided in each case with a code reading device (20, 22) that, when the respective connecting device (16) is connected to the respective connecting point (20, 22), is connected to the associated code memory device (18) for the purpose of reading the identification code, and having a control device (36) that is connected to the respective code reading device (20, 22) and by which the read identification codes are evaluated for the purpose of identifying the optical connection effected by the respective light waveguide connector cable (12, 14), in which optical distribution device the code memory device (18) is formed by an electronic memory chip that, when the respective connecting device (16) is connected to the respective connecting point (20, 22), is electrically connected to the associated code reading device (20, 22) for the purpose of reading the identification code.

2. Optical distribution device according to Claim 1, in which the respective code reading device (20, 22) has a printed circuit board on which there are provided reading contact points (56, 5,8) that make contact with mating contact components (52, 54) of the code memory device (18) when the connecting device (16) is connected.

3. Optical distribution device according to Claim 1 or 2, in which the respective identification code is formed by a multidigit code number, the last numeral of the code number defining the type of the light waveguide connector cable (12, 14), and in which the preceding numerals individually determine the light waveguide connector cable (12, 14) including the connecting devices connected thereto.

4. Optical distribution device according to Claim 3, in which in the case when the light waveguide connector cable (14) is provided with a multifibre connecting device at one end and with a plurality of single fibre connecting devices at the other end, the associated identification codes with the exception of the last numeral defining this cable type, are provided in the form of a serial enumeration.

5. Optical distribution device according to Claim 3, in which in the case when the light waveguide connector cable (12) is provided in each case with a connecting device (16) at both ends, the associated identification codes are identical to one another.

6. Optical distribution device according to Claim 3, in which the numerals preceding the last numeral of the number are yielded from the following formula:

$$CZF(n,x) = Z_{Max} * n + Z(n,x),$$

CZF(n,x) being the code numerical sequence of the connecting device x of the connector cable n, $Z_{Max}$ being the number of connecting devices of that connector cable which has the most connecting devices of the connector cables used, and Z(n,x) being a serial numeral from 0 up to the number of connecting devices x of the associated cable n minus one, which numeral is assigned to the respective connecting device x.

7. Light waveguide connector cable (12, 14) for use in an optical distribution device according to one of Claims 1 to 6, which has one or more optical fibres for transmitting light signals and, at each end, one or more connecting devices (16) that are provided in each case with an electrical code memory device (18) that stores an identification code for identifying the associated connecting device (16) and the optical fibre(s) connected to the latter, in which light waveguide connector cable the code memory device (18) is formed by an electronic memory chip that has connecting elements for electrical coupling to a code reading devide in order to transmit the stored identification code to the code reading device.

8. Light waveguide connector cable according to Claim 7, in which the optical fibre(s) connected to the respective connecting device are provided with an externally visible marking assigned to the associated identification code.

9. Light waveguide connector cable (12, 14) according to one of Claims 7 to 9, in which the respective connecting device (16) has a housing (44) on the outside of which the code memory device (18) is permanently attached, specifically in such a way that the code memory device (16) can be connected to an associated code reading device (20, 22) by connecting the connecting device (16).

## Revendications

1. Dispositif de distribution optique comprenant des premiers points de raccordement (8) pour raccorder des câbles à fibres optiques arrivants (4), comprenant des deuxièmes points de raccordement (10) pour raccorder des câbles à fibres optiques partants (6), comprenant au moins un câble de liaison à fibres optiques (12, 14) par le biais duquel un ou plusieurs des premiers points de raccordement (8) peuvent être reliés avec un ou plusieurs des deuxièmes points de raccordement (10) et qui présente à ses extrémités à chaque fois un ou plusieurs dispositifs de raccordement (16) pour le raccordement aux points de raccordement (8, 10), les dispositifs de raccordement (16) étant respectivement munis d'un dispositif de mémorisation de code (18) par lequel est mémorisé un code d'identification et les points de raccordement (8, 10) étant respectivement munis d'un dispositif de lecture de code (20, 22) qui, lorsque le dispositif de raccordement (16) correspondant est raccordé au point de raccordement (20, 22) correspondant, est relié avec le dispositif de mémorisation de code (18) associé pour lire le code d'identification, et d'un dispositif de commande (36) qui est relié avec le dispositif de lecture de code (20, 22) correspondant et par lequel les codes d'identification lus sont interprétés en vue de l'identification de la liaison optique réalisée par le câble de liaison à fibres optiques (12, 14) correspondant, le dispositif de mémorisation de code (18) étant formé par une puce de mémoire électronique qui, lorsque le dispositif de raccordement (16) correspondant est raccordé au point de raccordement correspondant (20, 22), est reliée galvaniquement au dispositif de lecture de code (20, 22) en vue de lire le code d'identification.

2. Dispositif de distribution optique selon la revendication 1, le dispositif de lecture de code (20, 22) correspondant présentant un circuit imprimé sur lequel sont prévus des points de contact de lecture (56, 58) qui, lorsque le dispositif de raccordement (16) est raccordé, entrent en contact avec des éléments de contact homologues (52, 54) du dispositif de mémorisation de code (18).

3. Dispositif de distribution optique selon la revendication 1 ou 2, le code d'identification correspondant étant formé par un numéro de code à plusieurs caractères, le dernier chiffre du numéro de code définissant le numéro de code du type de câble de liaison à fibres optiques (12, 14) et les chiffres précédents déterminant individuellement le câble de liaison à fibres optiques (12, 14) y compris les dispositifs de raccordement qui y sont raccordés.

4. Dispositif de distribution optique selon la revendication 3, avec lequel, dans le cas où le câble de liaison à fibres optiques (14) est prévu avec un dispositif de raccordement à plusieurs fibres à une extrémité et d'une pluralité de dispositifs de raccordement à une seule fibre à l'autre extrémité, les codes d'identification associés, à l'exception du dernier chiffre qui définit ce type de câble, sont prévus sous la forme d'une numérotation continue.

5. Dispositif de distribution optique selon la revendication 3, avec lequel, dans le cas où le câble de liaison à fibres optiques (12) est à chaque fois prévu avec un dispositif de raccordement (16) aux deux extrémités, les codes d'identification associés sont identiques les uns aux autres.

6. Dispositif de distribution optique selon la revendication 3, les chiffres qui précèdent le dernier chiffre du numéro étant obtenus à partir de la formule suivante :

$$CZF(n, x) = Z_{max} * n + Z(n, x),$$

où
$CZF(n, x)$ désignant la séquence de chiffres du code du dispositif de raccordement x du câble de liaison n, $Z_{max}$ le nombre de dispositifs de raccordement du câble de liaison qui, parmi les câbles de liaison utilisés, présente le plus de dispositifs de raccordement, et $Z(x, n)$ un chiffre continu de 0 au nombre moins un de dispositifs de raccordement x du câble associé n, lequel chiffre est associé au dispositif de raccordement x correspondant.

7. Câble de liaison à fibres optiques (12, 14) destiné à être utilisé dans un dispositif de distribution optique selon l'une des revendications 1 à 6, lequel présente une ou plusieurs fibres optiques pour transmettre des signaux lumineux et un ou plusieurs dispositifs de raccordement (16) à chaque extrémité, lesquels sont à chaque fois munis d'un dispositif de mémorisation de code (18) par lequel est mémorisé un code d'identification destiné à identifier le dispositif de raccordement (16) correspondant ainsi que la ou les fibres optiques raccordées à celui-ci, le dispositif de mémorisation de code (18) étant formé par une puce de mémoire électronique qui présente des éléments de raccordement pour la connexion galvanique avec un dispositif de lecture de code afin de transmettre le code d'identification mémorisé au dispositif de lecture de code.

8. Câble de liaison à fibres optiques selon la revendication 7, la ou les fibres optiques raccordées au dispositif de raccordement correspondant étant munies d'un marquage visible de l'extérieur affecté au code d'identification associé.

9. Câble de liaison à fibres optiques (12, 14) selon l'une des revendications 7 à 9, le dispositif de raccordement (16) correspondant présentant un boîtier (44) sur le côté extérieur duquel le dispositif de mémorisation de code (18) est fixé à demeure, et ce de telle sorte que le dispositif de mémorisation de code (18) peut être mis en liaison avec un dispositif de lecture de code (20, 22) associé par le raccordement du dispositif de raccordement (16).